(19) Europäisches Patentamt
European Patent Office
Office européen des brevets

(11) **EP 4 227 889 A1**

(12) **EUROPEAN PATENT APPLICATION**
published in accordance with Art. 153(4) EPC

(43) Date of publication:
**16.08.2023 Bulletin 2023/33**

(21) Application number: **20956733.8**

(22) Date of filing: **08.10.2020**

(51) International Patent Classification (IPC):
**G06T 7/00** (2017.01)

(52) Cooperative Patent Classification (CPC):
**G06T 7/00**

(86) International application number:
**PCT/JP2020/038139**

(87) International publication number:
**WO 2022/074786 (14.04.2022 Gazette 2022/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **AOKI, Takahiro**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **DATA GENERATION METHOD, INFORMATION PROCESSING DEVICE, AND DATA GENERATION PROGRAM**

(57) A decrease in the accuracy of biometric authentication using partial data is prevented.

Feature data (14) including a plurality of feature values is calculated from a biometric image (13). The plurality of feature values included in the feature data (14) are normalized to normalized feature values taking multilevel discrete values, respectively, according to a probability distribution representing the occurrence probabilities of possible values for the feature values. Binary feature data (16) including a plurality of bit strings corresponding to the plurality of feature values is generated by converting each of the normalized feature values to a bit string in such a manner that the number of bits with a specified one value of two binary values increases as the normalized feature value increases. Partial feature data (17) including a plurality of partial bit strings corresponding to the plurality of bit strings included in the binary feature data (16) and being smaller in bit length than the binary feature data (16) is generated by extracting at least one bit from each of the plurality of bit strings.

FIG. 1

**Description**

Technical Field

The embodiments discussed herein relate to a data generation method, an information processing apparatus, and a data generation program.

Background Art

There is a biometric authentication technique of authenticating users on the basis of their biometric images. Biometric authentication includes face authentication using face images, vein authentication using palm vein images or finger vein images, fingerprint authentication using fingerprint images, iris authentication using iris images, and others. The biometric authentication technique may be used for access control to buildings, protection of confidential information, and others.

For example, a biometric authentication system extracts feature data from a biometric image used for registration and registers the feature data in a database. The feature data may be a feature vector that includes a plurality of feature values corresponding to values in a plurality of dimensions. At the time of registration, the biometric authentication system then extracts feature data from a biometric image obtained for the authentication, and compares the extracted feature data with the feature data registered in the database. The authentication succeeds if these feature data are sufficiently similar, and the authentication fails if the feature data are not similar.

In this connection, there has been proposed an authentication apparatus that performs one-to-N authentication, which verifies a target by comparing the biometric information of the target with the biometric information of each registered person registered in a database. This proposed authentication apparatus applies run-length encoding to binary images that are the biometric information, and using run-length vectors, narrows down the biometric information of the registered people to those that are likely to match the biometric information of the target.

In addition, there has been proposed an image identification apparatus that determines whether a person appearing in a target image matches any one of a plurality of people appearing in a plurality of registered images registered in a database. In generating the registered images, the proposed image identification apparatus reduces the luminance by clipping luminance levels exceeding a predetermined upper limit to the upper limit and also removing higher-order bits of the luminance.

Citation List

Patent Literature

[PTL1] Japanese Laid-open Patent Publication No. 2010-277196
[PTL2] Japanese Laid-open Patent Publication No. 2012-58954

Summary of Invention

Technical Problem

It may be desired that a biometric authentication system performs comparison simply using part of feature data first generated, because of processing time constraints or hardware resource constraints. To satisfy this desire, for example, the biometric authentication system may narrow down the feature data of many users registered in a database to candidate feature data that is likely to match the feature data of a target user, as preprocessing of one-to-N authentication. However, there arises a problem that the accuracy of the biometric authentication may greatly decrease depending on how partial data used for the comparison is generated.

According to one aspect, the present disclosure intends to provide a data generation method, information processing apparatus, and data generation program for preventing a decrease in the accuracy of biometric authentication using partial data.

Solution to Problem

According to one aspect, there is provided a data generation method that a computer executes to perform a process that includes: calculating feature data including a plurality of feature values from a biometric image; normalizing the plurality of feature values included in the feature data to normalized feature values taking multilevel discrete values, respectively, according to a probability distribution representing the occurrence probabilities of possible values possible for the feature values; generating binary feature data including a plurality of bit strings corresponding to the plurality of feature values by converting each of the normalized feature values to a bit string in such a manner that the number of bits with a specified one value of two binary values increases as the normalized feature value increases; and generating partial feature data including a plurality of partial bit strings corresponding to the plurality of bit strings included in the binary feature data and being smaller in bit length than the binary feature data, by extracting at least one bit from each of the plurality of bit strings.

Further, according to one aspect, there is provided an information processing apparatus that includes a storage unit and a processing unit. Still further, there is provided a data generation program that is executed by a computer.

Advantageous Effects of Invention

According to one aspect, it is possible to prevent a decrease in the accuracy of biometric authentication using partial data.

The foregoing and other objects, features, and advantages of the present invention will become apparent from the following description of preferred embodiments, when read together with the accompany drawings.

Brief Description of Drawings

[FIG. 1] FIG. 1 is a view for describing an information processing apparatus according to a first embodiment.
[FIG. 2] FIG. 2 illustrates an example of an information processing system according to a second embodiment.
[FIG. 3] FIG. 3 illustrates an example of how to compare a biometric image with a template.
[FIG. 4] FIG. 4 illustrates an example of how to normalize and binarize a feature vector.
[FIG. 5] FIG. 5 illustrates an example of the relationship between binarization and hamming distances.
[FIG. 6] FIG. 6 illustrates an example of how to generate partial data from a binary feature vector.
[FIG. 7] FIG. 7 illustrates an example of the relationship between a selection bit and a partial feature value.
[FIG. 8] FIG. 8 illustrates an example of the relationship between an odd-number selection bit and a partial feature value and between an even-number selection bit and a partial feature value.
[FIG. 9] FIG. 9 illustrates another example of how to generate partial data from a binary feature vector.
[FIG. 10] FIG. 10 is a block diagram illustrating an example of the function of an authentication apparatus.
[FIG. 11] FIG. 11 illustrates an example of a template table and a setting table.
[FIG. 12] FIG. 12 is a flowchart describing an example of a template registration procedure.
[FIG. 13] FIG. 13 is a flowchart describing an example of a narrowing setting procedure.
[FIG. 14] FIG. 14 is a flowchart describing an example of a user authentication procedure.
[FIG. 15] FIG. 15 illustrates an example of an information processing system according to a third embodiment.

Description of Embodiments

Embodiments will be described in detail with reference to the accompanying drawings.

(First Embodiment)

A first embodiment will be described.

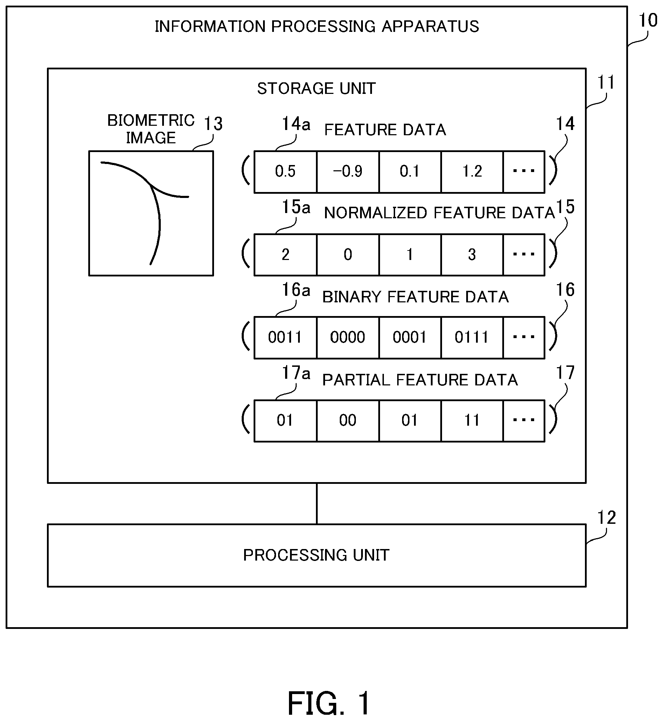

FIG. 1 is a view for describing an information processing apparatus according to the first embodiment.
The information processing apparatus 10 of the first embodiment performs biometric authentication. The biometric authentication may be any desired type of biometric authentication such as face authentication, palm vein authentication, finger vein authentication, fingerprint authentication, or iris authentication. The information processing apparatus 10 may be a client apparatus or a server apparatus. The information processing apparatus 10 may be called a computer or an authentication apparatus.
The information processing apparatus 10 includes a storage unit 11 and a processing unit 12. The storage unit 11 may be a volatile semiconductor memory device such as random access memory (RAM), or a non-volatile storage device such as a hard disk drive (HDD) or a flash memory. The processing unit 12 is a processor such as a central processing unit (CPU), a graphics processing unit (GPU), or a digital signal processor (DSP), for example. In this connection, the processing unit 12 may include an application specific electronic circuit such as an application specific integrated circuit (ASIC) or a field programmable gate array (FPGA). The processor executes programs stored in a memory (e.g., the storage unit 11) such as RAM. A set of multiple processors may be called a multiprocessor, or simply a "processor."

The storage unit 11 stores therein a biometric image 13, feature data 14, normalized feature data 15, binary feature data 16, and partial feature data 17. The biometric image 13 is an image that represents physical characteristics or behavioral characteristics of a user. For example, the biometric image 13 is a face image, vein image, fingerprint image, or iris image generated by an imaging device. The biometric image 13 may be generated by the information processing apparatus 10 or may be received from another information processing apparatus. The feature data 14, normalized feature data 15, binary feature data 16, and partial feature data 17 are generated from the biometric image 13 by the processing unit 12, as will be described below.

The processing unit 12 analyzes the biometric image 13 to generate the feature data 14. For example, the processing unit 12 extracts a feature point from the biometric image 13 through pattern matching, and carries out a principal component analysis (PCA) on an image region including the feature point. The feature data 14 includes a plurality of feature values including a feature value 14a. Each feature value may be a floating-point number. For example, the feature data 14 is a feature vector with values in a plurality of dimensions.

The processing unit 12 normalizes each of the plurality of feature values included in the feature data 14 to a normalized feature value. By doing so, the processing unit 12 generates the normalized feature data 15 with the plurality of normalized feature values including a normalized feature value 15a. The number of normalized feature values included in the normalized feature data 15 may be the same as the number of feature values included in the feature data 14. For example, the normalized feature data 15 may be a normalized feature vector that has the same number of dimensions as the feature data 14.

The normalized feature values here take multilevel discrete values. For example, possible values for the normalized feature values are consecutive non-negative integers starting with 0. The processing unit 12 normalizes the feature values according to a probability distribution representing the occurrence probabilities of possible values for the feature values. For example, assuming that the occurrence probabilities of the feature values follow a normal distribution, the processing unit 12 defines the mapping between a feature value interval and a normalized feature value on the basis of the mean and dispersion of the feature values. The processing unit 12 preferably divides the possible values for the feature values into a plurality of intervals such that different normalized feature values have an equal occurrence probability. The processing unit 12 may calculate the probability distribution in advance by analyzing many biometric image samples. In addition, a probability distribution may be calculated for each dimension or may be calculated in common for all dimensions.

The processing unit 12 converts each of the plurality of normalized feature values included in the normalized feature data 15 to a bit string. By doing so, the processing unit 12 generates the binary feature data 16 with the plurality of bit strings including a bit string 16a. The number of bit strings included in the binary feature data 16 may be the same as the number of normalized feature values included in the normalized feature data 15. For example, the binary feature data 16 may be a binary feature vector that has the same number of dimensions as the feature data 14 and normalized feature data 15.

Here, the processing unit 12 generates a bit string in such a manner that the number of bits with a specified one value of two binary values increases as a normalized feature value increases. The two binary values may be represented by 0 and 1, and the specified one value may be 1. The number of bits with the specified one value may represent a normalized feature value itself. For example, in the case where the normalized feature value 15a is 2, the bit string 16a obtained by converting the normalized feature value 15a contains two bits of 1. The plurality of bit strings preferably have the same bit length. The maximum value of the normalized feature values may be taken as the bit length. For example, in the case where the maximum value of the normalized feature values is 4, the bit length is four bits. The processing unit 12 may determine a normalization method so as to set a desired bit length.

In a bit string, bits with the specified one value are arranged in a regular order. The bits with the specified one value may be arranged in order from the least significant bit or from the most significant bit. For example, in the case where the normalized feature value 15a is 2, the bit string 16a has a bit length of four bits, and the specified one value is 1, the lowest two bits of the bit string 16a are 1 and the remaining two higher bits thereof are 0. The order in which bits with the specified one value are arranged may be shuffled in a regular manner. Alternatively, the order in which bits with the specified one value are arranged may be used in common for the plurality of bit strings, or may differ among the bit strings.

The processing unit 12 extracts at least one bit from each of the plurality of bit strings included in the binary feature data 16. By doing so, the processing unit 12 generates the partial feature data 17 with the plurality of partial bit strings including a partial bit string 17a. The number of partial bit strings included in the partial feature data 17 may be the same as the number of bit strings included in the binary feature data 16. For example, the partial feature data 17 may be a partial feature vector that has the same number of dimensions as the feature data 14, normalized feature data 15, and binary feature data 16.

Each partial bit string is smaller in bit length than each bit string included in the binary feature data 16. The plurality of partial bit strings preferably have the same bit length. The bit length of the partial bit strings is specified in advance according to usage of the partial feature data 17. The processing unit 12 may determine positions of extracting bits from a bit string, according to the bit length of the bit strings and the bit length of the partial bit strings, that is, the bit lengths before and after the conversion.

Bits to be extracted may be selected as evenly as possible from an entire bit string. For example, in the case where the bit string 16a has a bit length of four bits and the partial bit string 17a has a bit length of two bits, the partial bit string 17a has bits #0 and #2 or bits #1 and #3 of the bit string 16a. In this connection, the bit #0 is the least significant bit. The positions of extracting bits may be used in common for the plurality of partial bit strings or may differ among the partial bit strings. In addition, the processing unit 12 may determine the positions of extracting bits such that the bits extracted include the middle bit of a bit string. In the case where the bit length of a bit string is an even number, the bit string has two middle bits, adjacent even-number and odd-number bits. The processing unit 12 may select one of these two bits.

The processing unit 12 may use the partial feature data 17 for accelerating the biometric authentication. For example, the processing unit 12 uses the partial feature data 17 to perform preprocessing of narrowing down the binary feature data of a large number of users registered in a database to candidates that are likely to match the binary feature data 16. The processing unit 12 may evaluate the degree of similarity between the partial feature data 17 and another partial feature data, using a hamming distance. The hamming distance is calculated by using a logical operation of calculating bitwise exclusive OR between two pieces of partial feature data.

The information processing apparatus 10 of the first embodiment performs biometric authentication on the basis of the feature data 14 extracted from the biometric image 13. In addition, the information processing apparatus 10 generates the partial feature data 17 whose data amount is less than that of the feature data 14, and performs a simple comparison process using the partial feature data 17. It is thus possible to reduce the computational cost of the comparison process and achieve fast biometric authentication even under processing time constraints or hardware resource constraints.

In addition, the feature values are normalized and then binarized in the course of generation of the partial feature data 17. This makes it possible to evaluate the difference between two feature values with a logical operation of calculating a hamming distance. A bitwise logical operation is less in computational cost than a floating-point operation, and is performed at a high speed even by using hardware with low computing power such as an embedded processor. It is thus possible to achieve fast biometric authentication.

In addition, in the generation of the partial feature data 17, at least one bit is thinned out from each of the plurality of bit strings included in the binary feature data 16. That is to say, the partial feature data 17 includes a plurality of partial bit strings corresponding to the plurality of bit strings of the binary feature data 16, and it is not that a certain bit string of the binary feature data 16 is lost in its entirety. In other words, it is not that information on a certain feature value of the feature data 14 is removed. It is thus possible to prevent a decrease in the authentication accuracy due to the use of the partial feature data 17.

(Second Embodiment)

A second embodiment will now be described.

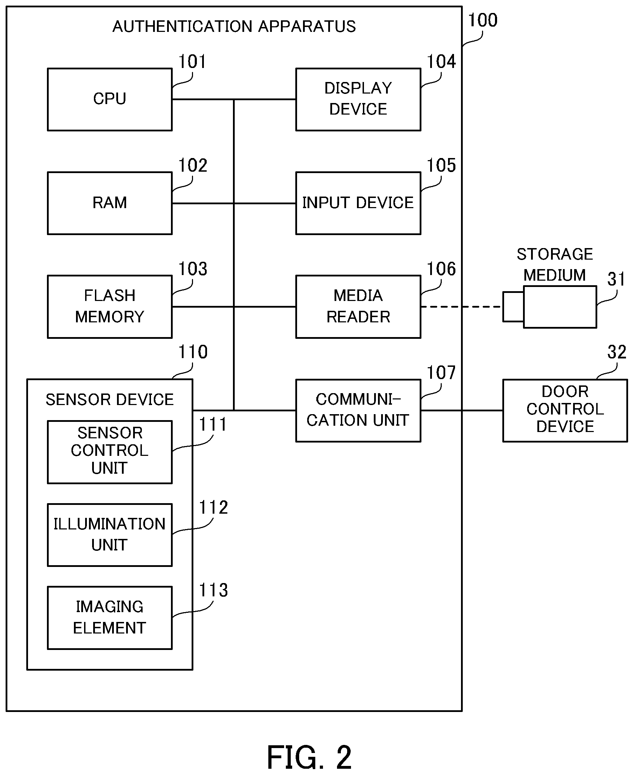

FIG. 2 illustrates an example of an information processing system according to the second embodiment.

The information processing system of the second embodiment authenticates users with palm vein authentication, which is a type of biometric authentication, for controlling user access to a room. The information processing system includes an authentication apparatus 100 and a door control device 32. The authentication apparatus 100 performs user authentication using a palm vein image of a user to determine whether the user is a registered user. If the authentication succeeds, the authentication apparatus 100 gives an entry permission instruction to the door control device 32. If the authentication fails, the authentication apparatus 100 gives an entry rejection instruction to the door control device 32. The door control device 32 is connected to the authentication apparatus 100. The door control device 32 controls the locking and unlocking of a door in accordance with an instruction from the authentication apparatus 100.

The authentication apparatus 100 may be called an information processing apparatus or a computer. The authentication apparatus 100 corresponds to the information processing apparatus 10 of the first embodiment. The authentication apparatus 100 includes a CPU 101, a RAM 102, a flash memory 103, a display device 104, an input device 105, a media reader 106, a communication unit 107, and a sensor device 110. The above units are connected to a bus. The CPU 101 corresponds to the processing unit 12 of the first embodiment. The R_AM 102 or flash memory 103 corresponds to the storage unit 11 of the first embodiment.

The CPU 101 is a processor that executes program instructions. The CPU 101 may be an embedded processor with low power consumption. The CPU 101 loads at least part of a program and data from the flash memory 103 to the RAM 102 and executes the program. The authentication apparatus 100 may include a plurality of processors. A set of processors may be called a multiprocessor, or simply a "processor."

The R_AM 102 is a volatile semiconductor memory device that temporarily stores therein programs to be executed by the CPU 101 and data to be used by the CPU 101 in processing. The authentication apparatus 100 may include a different type of memory device than R_AM. The flash memory 103 is a non-volatile storage device that stores therein software programs and data. The software includes operating system (OS), middleware, and application software. The authentication apparatus 100 may include a different type of non-volatile storage device such as an HDD.

The display device 104 displays images in accordance with instructions from the CPU 101. Examples of the display device 104 include a liquid crystal display or organic electro-luminescence (EL) display. The authentication apparatus 100 may include a different type of output device. The input device 105 senses user's operations and gives an input signal to the CPU 101. Examples of the input device 105 include a touch panel and a button key.

The media reader 106 is a reading device that reads programs or data from a storage medium 31. The storage medium 31 may be a magnetic disk, an optical disc, or a semiconductor memory. Magnetic disks may include flexible disks (FDs) and HDDs. Optical discs may include compact discs (CDs) and digital versatile discs (DVDs). For example, the media reader 106 copies a program or data read from the storage medium 31 into a storage device such as the flash memory 103. The storage medium 31 may be a portable storage medium. The storage medium 31 may be used for a distribution of programs or data. The storage medium 31 and flash memory 103 may be called computer-readable storage media.

The communication unit 107 is connected to the door control device 32 and communicates with the door control device 32. For example, the communication unit 107 is connected to the door control device 32 with a cable. The communication unit 107 sends a signal instructing the opening of the door and a signal instructing the closing of the door to the door control device 32.

The sensor device 110 is an image sensor. Before a user opens the door to enter the room, the user places his/her palm over the sensor device 110. The sensor device 110 then senses the palm, generates a palm vein image, and stores the palm vein image in the RAM 102. The sensor device 110 includes a sensor control unit 111, an illumination unit 112, and an imaging element 113.

The sensor control unit 111 controls the operation of the sensor device 110. The sensor control unit 111 senses the palm, and controls the illumination unit 112 and imaging element 113 to generate the palm vein image. The illumination unit 112 emits light to the palm in accordance with an instruction from the sensor control unit 111. The imaging element 113 captures an image of palm veins appearing by the light of the illumination unit 112, in accordance with an instruction from the sensor control unit 111.

The following describes how to perform biometric authentication.

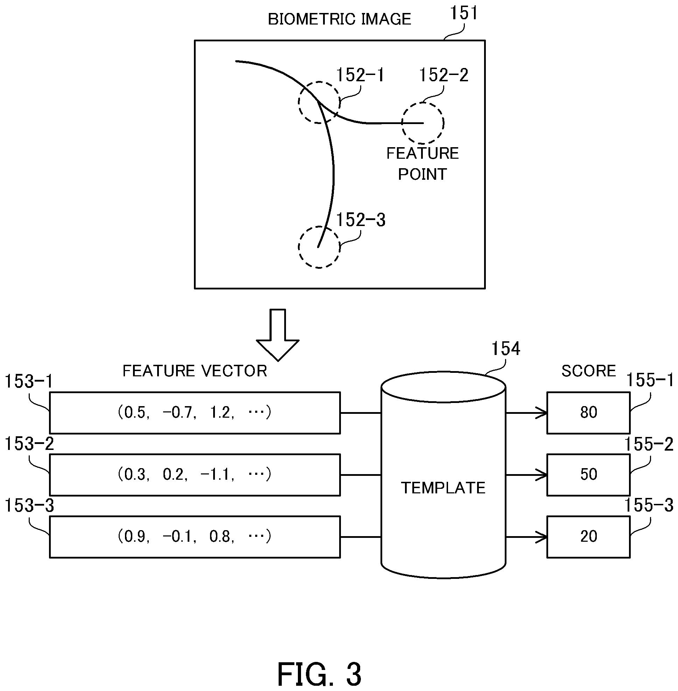

FIG. 3 illustrates an example of how to compare a biometric image with a template.

When a user places his/her palm over the sensor device 110, the sensor device 110 generates a biometric image 151. The authentication apparatus 100 analyzes the biometric image 151. In the analysis of the biometric image 151, the authentication apparatus 100 extracts a plurality of feature points through pattern matching. Here, it is known that different users have different features. For example, the feature points to be extracted are end points of veins and branching points of veins. For example, feature points 152-1, 152-2, and 152-3 are extracted from the biometric image 151. The feature point 152-1 corresponds to a branching point of a vein, and the feature points 152-2 and 152-3 correspond to end points of the vein.

With respect to each of the plurality of feature points, the authentication apparatus 100 cuts out, from the biometric image 151, an image region of a predetermined size with the feature point as its center, and generates a feature vector from the image region. For example, the authentication apparatus 100 generates the feature vector by carrying out a principal component analysis on the distribution of pixel values in the cutout image region. For example, the number of dimensions in the feature vector is 64, 128, 256, 512, or another. An element in each dimension of the feature vector is a floating-point number. For example, the authentication apparatus 100 generates a feature vector 153-1 from the feature point 152-1, a feature vector 153-2 from the feature point 152-2, and a feature vector 153-3 from the feature point 152-3.

A template 154 is registered in a database held in the authentication apparatus 100. The template 154 is registered information of a certain user, and includes information on a plurality of feature points corresponding to the feature points 152-1, 152-2, and 152-3. The template 154 is generated from a biometric image at the time of registration. With respect to each feature point, the authentication apparatus 100 compares the generated feature vector with the information of the template 154 and calculates a score indicating a degree of similarity. The score may be a correlation value that increases as the degree of similarity increases or may be an error value that increases as the degree of similarity decreases.

For example, with respect to the feature point 152-1, the authentication apparatus 100 calculates a score 155-1 from the feature vector 153-1. With respect to the feature point 152-2, the authentication apparatus 100 calculates a score 155-2 from the feature vector 153-2. With respect to the feature point 152-3, the authentication apparatus 100 calculates a score 155-3 from the feature vector 153-3.

The authentication apparatus 100 then determines based on the scores of the plurality of feature points whether the biometric image 151 and the template 154 represent the same person. For example, the authentication apparatus 100 calculates the average score of the plurality of feature points. In the case of using a score that increases as the degree of similarity increases, the authentication apparatus 100 determines that the authentication succeeds if the average score exceeds a threshold, and determines that the authentication fails if the average score is less than or equal to the threshold. Alternatively, in the case of using a score that increases as the degree of similarity decreases, the authentication apparatus 100 determines that the authentication succeeds if the average score is less than a threshold, and determines that the authentication fails if the average score is greater than or equal to the threshold.

Here, for accelerating the comparison process, the template 154 includes binary feature vectors, which will be described later, as registered information on the feature points. In addition, the authentication apparatus 100 converts the feature vectors 153-1, 153-2, and 153-3 to binary feature vectors, respectively, and calculates scores by comparing the binary feature vectors with the binary feature vectors included in the template 154. The authentication apparatus 100 converts a feature vector to a binary feature vector in the manner described below.

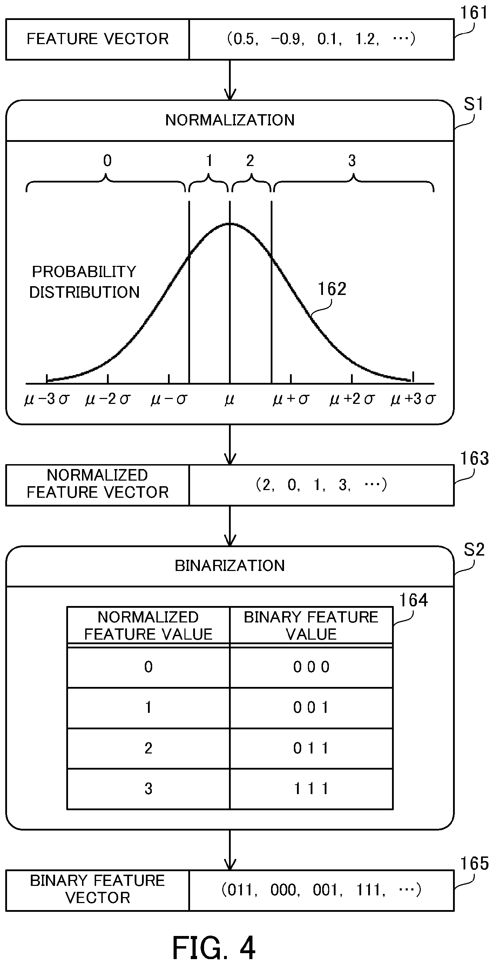

FIG. 4 illustrates an example of how to normalize and binarize a feature vector.

A feature vector 161 is a vector that contains a floating-point number as an element in each dimension. The authentication apparatus 100 performs normalization S1 on the feature vector 161 to convert the feature vector 161 to a normalized feature vector 163. The normalized feature vector 163 has the same number of dimensions as the feature vector 161. The authentication apparatus 100 then performs binarization S2 on the normalized feature vector 163 to convert the normalized feature vector 163 to a binary feature vector 165. The binary feature vector 165 has the same number of dimensions as the normalized feature vector 163 and has therefore the same number of dimensions as the feature vector 161.

In the normalization S1, the authentication apparatus 100 uses a probability distribution 162. The probability distribution 162 represents the occurrence probabilities of the feature values that are the elements in the dimensions of the feature vector 161. The authentication apparatus 100 may use the probability distribution in common for the plurality of dimensions or may use different probability distributions for different dimensions. The probability distribution 162 is estimated by analyzing various feature vectors extracted from various biometric images in advance. This advance analysis may be called a learning process. The probability distribution 162 is regarded as a normal distribution and is defined by the mean $\mu$ and standard deviation $\sigma$ of feature values.

The value range of the feature values is divided into a plurality of intervals such that the intervals have an equal occurrence probability. The intervals of the feature values may be defined by using the mean $\mu$ and standard deviation $\sigma$. The number of intervals is specified in advance, taking into account the bit length of the binary feature vector 165. Then, a normalized feature value is assigned to each of the plurality of intervals. By doing so, a feature value and a normalized feature value are mapped to each other. The number of possible values for the normalized feature values is less than that for the feature values. The normalized feature values are non-negative integers. As the normalized feature values, non-negative integers in increasing order of 0, 1, 2, ... are assigned to the intervals in ascending order from an interval with the smallest feature value.

For example, the authentication apparatus 100 converts a feature value of 0.5 to a normalized feature value of 2, a feature value of -0.9 to a normalized feature value of 0, a feature value of 0.1 to a normalized feature value of 1, and a feature value of 1.2 to a normalized feature value of 3. The normalized feature vector 163 contains these normalized feature values as elements.

In the binarization S2, the authentication apparatus 100 converts each normalized feature value in the dimensions of the normalized feature vector 163 to a binary feature value. The binary feature vector 165 contains the binary feature values as its elements. The correspondence relationship between a normalized feature value and a binary feature value is defined as seen in a table 164. Each binary feature value is a bit string in which each bit has one of two binary values, 0 and 1. The bit length of the binary feature values is equal to the maximum value of the normalized feature values. The bit length of the binary feature values is 4 bits, 8 bits, 16 bits, or another, for example. Referring to the example of FIG. 4, the maximum value of the normalized feature values is 3, and therefore the binary feature values are 3-bit strings.

A binary feature value has bits of 1, the number of which is equal to the corresponding normalized feature value. Bits of 1 are preferentially set in order from the least significant bit. For example, the authentication apparatus 100 converts a normalized feature value of 0 to a binary feature value of 000, a normalized feature value of 1 to a binary feature value of 001, a normalized feature value of 2 to a binary feature value of 011, and a normalized feature value of 3 to a binary feature value of 111.

In this connection, the authentication apparatus 100 only needs to evaluate the distance between different feature values. Therefore, in the probability distribution 162, the authentication apparatus 100 may assign non-negative integers in increasing order of 0, 1, 2, ... to the intervals in descending order from an interval with the highest feature value. In addition, the authentication apparatus 100 may generate a binary feature value in such a manner that the binary feature value has bits of 0, the number of which is equal to the corresponding normalized feature value. In addition, the authentication apparatus 100 may generate the binary feature value in such a manner that bits of 1 are preferentially set in order from the most significant bit. In addition, the authentication apparatus 100 may shuffle the bit string of a binary feature value so that bits of 1 or bits of 0 appear in a predetermined order of priority. For example, assuming that bits are expressed as bits #0, #1, and #2 in order from the least significant bit, the authentication apparatus 100 may arrange bits of 1 in the following order of priority, bits #1, #0, and #2.

The authentication apparatus 100 registers a template including the binary feature vectors of a plurality of feature points with respect to each registered user in the database. The authentication apparatus 100 calculates the hamming distance between a binary feature vector of a user who desires an entry permission and a binary feature vector included in a template, and calculates a score based on the hamming distance. The hamming distance is the number of different bits between these two bit strings. The hamming distance is calculated using a bitwise exclusive OR operation. The computational load of the logical operation of calculating a hamming distance is less than that of a floating-point operation of calculating the difference between two floating-point numbers.

To calculate a score, the authentication apparatus 100 may calculate the hamming distance between two binary feature values for each dimension and summing the hamming distances of all dimensions. In addition, the authentication apparatus 100 may convert the hamming distance to a score in such a manner that a lower score is obtained from a greater hamming distance and a higher score is obtained from a smaller hamming distance. The following describes an advantage of using the hamming distance between binary feature values.

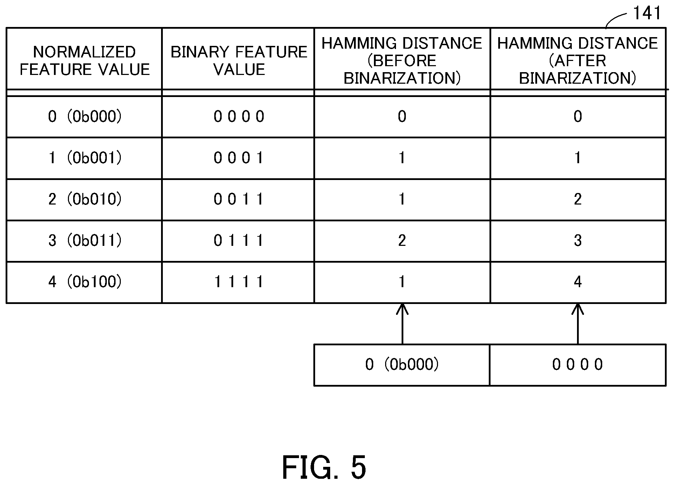

FIG. 5 illustrates an example of the relationship between binarization and hamming distances.

The table 141 represents the relationship between a normalized feature value, a binary feature value, a hamming distance before binarization, and a hamming distance after binarization. Consider now the case where, as seen in the table 141, the maximum value of normalized feature values is 4 and the bit length of binary feature values is four bits.

The general binary representation of a normalized feature value of 0 is 0b000. The general binary representation of a normalized feature value of 1 is 0b001. The general binary representation of a normalized feature value of 2 is 0b010. The general binary representation of a normalized feature value of 3 is 0b011. The general binary representation of a normalized feature value of 4 is 0b100. By performing a general subtraction between the normalized feature value of 0 and each of the normalized feature values of 0, 1, 2, 3, and 4, Euclidean distances of 0, 1, 2, 3, and 4 are calculated.

Here, if a logical operation of calculating bitwise exclusive OR is performed on the normalized feature values, hamming distances of 0, 1, 1, 2, 1 are calculated. These hamming distances, however, are not identical to the Euclidean distances, or do not correctly represent the distances between two normalized feature values. On the other hand, in the case of performing a logical operation of calculating bitwise exclusive OR on the binary feature values, hamming distances of 0, 1, 2, 3, 4 are calculated. These hamming distances are identical to the Euclidean distances, and correctly represent the distances between two normalized feature values.

The use of hamming distances calculated with the logical operation as described above eliminates the execution of the floating-point operation that needs high computational load. In addition, the use of binary feature values obtained by converting feature values enables calculating hamming distances that are identical to Euclidean distances. Therefore, the computational speed and authentication accuracy of the biometric authentication are balanced.

In this connection, the authentication apparatus 100 may store binary feature vectors as they are in the database or may encrypt and then store the binary feature vectors in the database. In the case of encrypting the binary feature vectors, the authentication apparatus 100 prepares an encryption bit string that has the same size as the binary feature vectors and is unique to the authentication apparatus 100. The authentication apparatus 100 calculates the exclusive OR between each binary feature vector and the encryption bit string to thereby mask the binary feature vectors with the encryption bit string.

When comparing a binary feature vector used for authentication with a template, the authentication apparatus 100 calculates the exclusive OR between the binary feature vector used for the authentication and the above encryption bit string to thereby encrypt the binary feature vector used for the authentication. The authentication apparatus 100 then calculates a score by calculating the hamming distance between the two encrypted binary feature vectors. Because of the nature of the exclusive OR and hamming distance, the same hamming distance as in the case of performing decryption is calculated, even without decrypting the encrypted binary feature vectors.

The following describes one-to-N authentication that is performed by the authentication apparatus 100. The authentication apparatus 100 performs the one-to-N authentication, which is able to identify a user who desires an entry permission from a biometric image without a user ID from the user. In the one-to-N authentication, the templates of a plurality of users are registered in the database. The number of templates that may be registered in the database widely ranges from 100 to 1,000,000. The authentication apparatus 100 calculates scores between the binary feature vector of a certain user and each of the plurality of templates registered in the database and searches for a template with a sufficiently high degree of similarity. For example, an authentication success is determined if a template whose score exceeds a threshold is found, and the user who has gotten an entry permission is the user corresponding to a template with the highest score.

It is considered that, in the case where N templates are registered in the database, the authentication apparatus 100 performs the comparison process N times. However, binary feature vectors may have a bit length of up to several thousand bits, and a detailed comparison process against the N templates have a high load. To deal with this, the authentication apparatus 100 performs a narrowing process to narrow down the N templates registered in the database to templates to be used for the comparison, as preprocessing.

In the narrowing process, the authentication apparatus 100 uses partial feature vectors that are smaller in size than the binary feature vectors. The authentication apparatus 100 extracts at least one bit from each binary feature vector and generates a partial feature vector with the extracted bit(s). Templates whose scores calculated using such partial feature vectors are high are taken as candidate templates that are likely to have high scores if the scores are calculated using binary feature vectors. The detailed comparison process may be performed only using the candidate templates among the N templates.

The size of the partial feature vectors is determined based on a desired narrowing ratio and the number of templates N. As the size of the partial feature vectors decreases, the narrowing accuracy decreases and more candidate templates are obtained through the narrowing process, but the load of the narrowing process itself decreases. As the size of the partial feature vectors increases, the narrowing accuracy increases and fewer candidate templates are obtained through the narrowing process, but the load of the narrowing process itself increases.

In the second embodiment, a partial feature vector has the same number of dimensions as a binary feature vector, as will be described below. The partial feature value in each dimension of the partial feature vector is smaller in bit length than the binary feature value in each dimension of the binary feature vector. That is, the authentication apparatus 100 extracts at least one bit from each dimension of the binary feature vector. This improves the accuracy of the narrowing process, compared with an approach of reducing the number of dimensions.

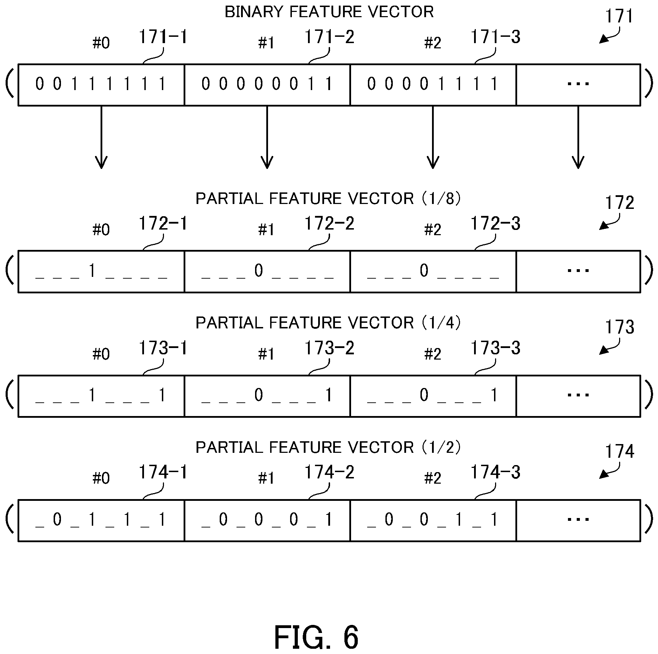

FIG. 6 illustrates an example of how to generate partial data from a binary feature vector.

A binary feature vector 171 contains a plurality of binary feature values including binary feature values 171-1, 172-2, and 171-3 as elements in a plurality of dimensions. The binary feature values 171-1, 172-2, and 171-3 have a bit length of eight bits. The binary feature value 171-1 is 00111111 and corresponds to a normalized feature value of 6. The binary feature value 171-2 is 00000011 and corresponds to a normalized feature value of 2. The binary feature value 171-3 is 00001111 and corresponds to a normalized feature value of 4.

In the case where the 8-bit binary feature values are compressed to 1-bit partial feature values, the authentication apparatus 100 generates a partial feature vector 172 from the binary feature vector 171. The partial feature vector 172 has a compression ratio of one-eighth. The partial feature vector 172 includes partial feature values 172-1, 172-2, and 172-3 corresponding to the binary feature values 171-1, 171-2, and 171-3. The authentication apparatus 100 extracts one bit from the binary feature value 171-1 to generate the partial feature value 172-1. In addition, the authentication apparatus 100 extracts one bit from the binary feature value 171-2 to generate the partial feature value 172-2. The authentication apparatus 100 extracts one bit from the binary feature value 171-3 to generate the partial feature value 172-3.

In the case where the 8-bit binary feature values are compressed to 2-bit partial feature values, the authentication apparatus 100 generates a partial feature vector 173 from the binary feature vector 171. The partial feature vector 173 has a compression ratio of one-fourth. The partial feature vector 173 includes partial feature values 173-1, 173-2, and 173-3 corresponding to the binary feature values 171-1, 171-2, and 171-3. The authentication apparatus 100 extracts two bits from the binary feature value 171-1 to generate the partial feature value 173-1. In addition, the authentication apparatus 100 extracts two bits from the binary feature value 171-2 to generate the partial feature value 173-2. The authentication apparatus 100 extracts two bits from the binary feature value 171-3 to generate the partial feature value 173-3.

In the case where the 8-bit binary feature values are compressed to 4-bit partial feature values, the authentication apparatus 100 generates a partial feature vector 174 from the binary feature vector 171. The partial feature vector 174 has a compression ratio of one-second. The partial feature vector 174 includes partial feature values 174-1, 174-2, and 174-3 corresponding to the binary feature values 171-1, 171-2, and 171-3. The authentication apparatus 100 extracts four bits from the binary feature value 171-1 to generate the partial feature value 174-1. In addition, the authentication apparatus 100 extracts four bits from the binary feature value 171-2 to generate the partial feature value 174-2. The authentication apparatus 100 extracts four bits from the binary feature value 171-3 to generate the partial feature value 174-3.

Here, the authentication apparatus 100 selects bits to be extracted from a binary feature value as follows. In the case where a binary feature value is compressed to one k-th of its original size, the authentication apparatus 100 divides the bit string of the binary feature value into groups of k consecutive bits and extracts one bit from each group of k consecutive bits, so as to extract bits evenly. Which bit to extract from k bits is determined, with a middle bit of the binary feature value as a reference. The authentication apparatus 100 specifies the middle bit of the binary feature value and then specifies the relative position of the middle bit in the k bits including the middle bit. The authentication apparatus 100 extracts one bit at the specified relative position from each group of k consecutive bits.

In the case where the bit length of a binary feature value is an odd number, the binary feature value has one middle bit. In the case where the bit length of the binary feature value is an even number, on the other hand, the binary feature value has two candidate bits for the middle bit, an even-number bit and an odd-number bit. For example, considering that an 8-bit binary feature value has bits #0, #1, #2, #3, #4, #5, #6, and #7, either bit #3 or #4 of these bits is a middle bit. Therefore, the authentication apparatus 100 sets an even-odd flag indicating which bit is used as a middle bit, an even-number bit or an odd-number bit. For example, the even-odd flag is a parameter that is specified in advance by the administrator of the authentication apparatus 100. A plurality of authentication apparatuses, if exist, may use different even-odd flags.

Referring to the example of FIG. 6, an even-number bit, i.e., the bit #4 is taken as a middle bit. In generating the partial feature vector 172, the bit #4 is selected from eight bits. Therefore, the partial feature values 172-1, 172-2, and 172-3 correspond respectively to the bits #4 of the binary feature values 171-1, 171-2, and 171-3.

In generating the partial feature vector 173, eight bits are divided into two groups of four bits, and the least significant bit corresponding to the position of the bit #4 is selected from each group of consecutive four bits. Therefore, the partial feature values 173-1, 173-2, and 173-3 correspond respectively to the bits #0 and #4 of the binary feature values 171-1, 171-2, and 171-3.

In generating the partial feature vector 174, eight bits are divided into four groups of two bits, and a lower bit corresponding to the position of the bit #4 is selected from each group of consecutive two bits. Therefore, the partial feature values 174-1, 174-2, and 174-3 correspond respectively to the bits #0, #2, #4, and #6 of the binary feature values 171-1, 171-2, and 171-3.

As described above, to reduce the size of a binary feature vector, the authentication apparatus 100 extracts at least one bit from each element in the plurality of dimensions. The extracted bits include at least a middle bit. The following describes an advantage of extracting the middle bit.

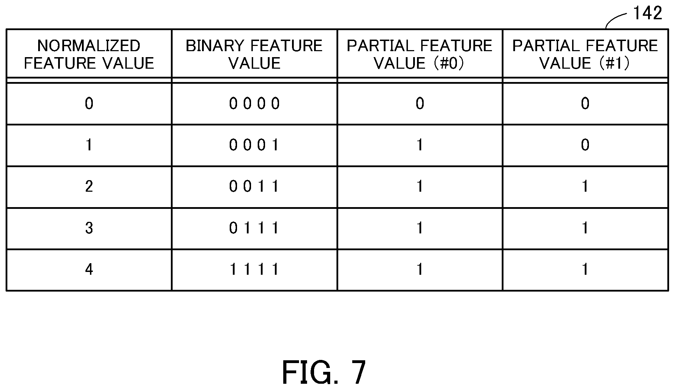

FIG. 7 illustrates an example of the relationship between a selection bit and a partial feature value.

The table 142 represents the relationship between a normalized feature value, a binary feature value, a partial feature value obtained when a bit #0 is extracted, and a partial feature value obtained when a bit #1 is extracted. The table 142 represents the case where the maximum value of normalized feature values is 4, binary feature values have a bit length of four bits, and partial feature values have a bit length of one bit.

In the case of extracting the bit #0, which is not a middle bit, partial feature values corresponding to the normalized feature values of 0, 1, 2, 3, and 4 are 0, 1, 1, 1, and 1, respectively. Among the five normalized feature values, one normalized feature value is converted to a partial feature value of 0, and the remaining four normalized feature values are each converted to a partial feature value of 1. Therefore, these different partial feature values have a large difference in occurrence probability. On the other hand, in the case of extracting the bit #1, which is a middle bit, partial feature values corresponding to the normalized feature values of 0, 1, 2, 3, and 4 are 0, 0, 1, 1, and 1, respectively. Among the five normalized feature values, two normalized feature values are each converted to a partial feature value of 0, and the remaining three normalized feature values are each converted to a partial feature value of 1. Therefore, these different partial feature values have a small difference in occurrence probability.

Extracting bits evenly from a binary feature value is equivalent to reducing the resolution of a normalized feature value. By extracting bits including a middle bit from each binary feature value, it becomes possible to maintain the distance relationship between different binary feature values as much as possible. The following describes a difference that occurs depending on whether a middle bit is an even-number bit or an odd-number bit.

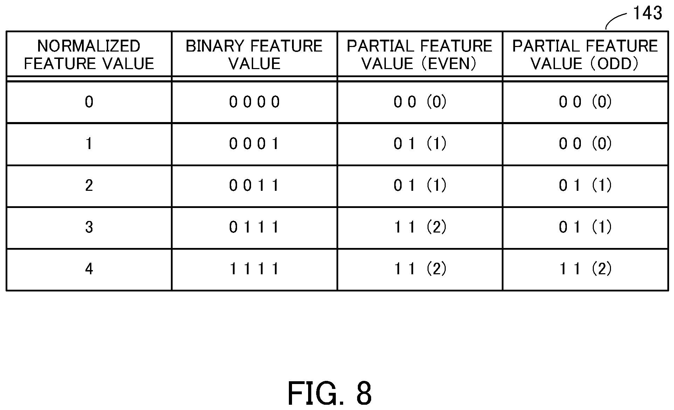

FIG. 8 illustrates an example of the relationship between an odd-number selection bit and a partial feature value and between an even-number selection bit and a partial feature value.

The table 143 represents the relationship between a normalized feature value, a binary feature value, a partial feature value obtained when an even-number bit is selected as a middle bit, and a partial feature value obtained when an odd-number bit is selected as a middle bit. The table 143 represents the case where the maximum value of normalized feature values is 4, binary feature values have a bit length of four bits, and partial feature values have a bit length of two bits.

In the case where an even-number bit is selected as a middle bit, the bits #0 and #2 are extracted from the bits #0, #1, #2, and #3 of a binary feature value. In this case, the normalized feature values of 0, 1, 2, 3, and 4 are converted to partial feature values of 00, 01, 01, 11, and 11, respectively. Each of these partial feature values is equivalent to an integer that is obtained by dividing a normalized feature value by two and rounding up. On the other hand, in the case where an odd-number bit is selected as a middle bit, the bits #1 and #3 are extracted. In this case, the normalized feature values of 0, 1, 2, 3, and 4 are converted to partial feature values of 00, 00, 01, 01, and 11, respectively. Each of these partial feature values is equivalent to an integer that is obtained by dividing a normalized feature value by two and rounding down.

That is to say, selecting an even-number bit as a middle bit from a binary feature value whose bit length is an even number means rounding up to the nearest integer. On the other hand, selecting an odd-number bit as a middle bit means rounding down to the nearest integer. In the above description, the even-odd flag is applied in common for the plurality of dimensions of binary feature vectors. However, different even-odd flags may be applied for the dimensions.

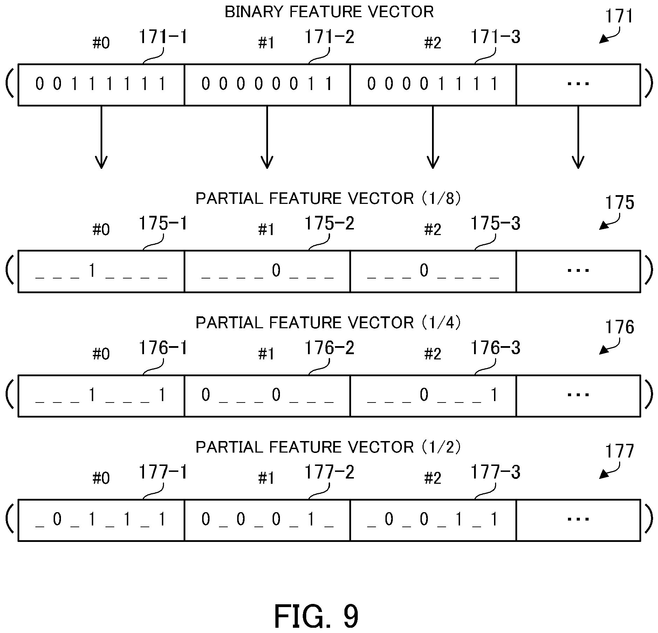

FIG. 9 illustrates another example of how to generate partial data from a binary feature vector.

In this example, the authentication apparatus 100 selects an even-number bit as a middle bit from each binary feature value in even-number dimensions and an odd-number bit as a middle bit from each binary feature value in odd-number dimensions.

In the case where the 8-bit binary feature values are compressed to 1-bit partial feature values, the authentication apparatus 100 generates a partial feature vector 175 from the binary feature vector 171. The partial feature vector 175 includes partial feature values 175-1, 175-2, and 175-3 corresponding to the binary feature values 171-1, 171-2, and 171-3. The partial feature values 175-1 and 175-3 correspond respectively to the bits #4 of the binary feature values 171-1 and 171-3. On the other hand, the partial feature value 175-2 corresponds to the bit #3 of the binary feature value 171-2.

In the case where the 8-bit binary feature values are compressed to 2-bit partial feature values, the authentication apparatus 100 generates a partial feature vector 176 from the binary feature vector 171. The partial feature vector 176 includes partial feature values 176-1, 176-2, and 176-3 corresponding to the binary feature values 171-1, 171-2, and 171-3. The partial feature values 176-1 and 176-3 correspond respectively to the bits #0 and #4 of the binary feature values 171-1 and 171-3. On the other hand, the partial feature value 176-2 corresponds to the bits #3 and #7 of the binary feature value 171-2.

In the case where the 8-bit binary feature values are compressed to 4-bit partial feature values, the authentication apparatus 100 generates a partial feature vector 177 from the binary feature vector 171. The partial feature vector 177 includes partial feature values 177-1, 177-2, and 177-3 corresponding to the binary feature values 171-1, 171-2, and 171-3. The partial feature values 177-1 and 177-3 correspond respectively to the bits #0, #2, #4, and #6 of the binary feature values 171-1 and 171-3. On the other hand, the partial feature value 177-2 corresponds to the bits #1, #3, #5, and #7 of the binary feature value 171-2. Selecting a different middle bit depending on a dimension as described above makes it possible to prevent a decrease in the accuracy due to a difference in the rounding method.

Here, as described earlier, the binary feature vectors registered in the database may have been encrypted. In this case, the authentication apparatus 100 may extract bits from each dimension of an encrypted binary feature vector in the manner described above. In addition, as described earlier, bits of 1 may be arranged, not in order from an end but in a shuffled order, in a binary feature value. In this case, the authentication apparatus 100 determines bits to be extracted, on the basis of the bits arranged before shuffling.

The following describes how to control the narrowing process using partial feature vectors. In the case where a great number of templates are registered in the database, the authentication apparatus 100 is able to reduce the total processing time of the biometric authentication by performing the narrowing process. In addition, the authentication apparatus 100 may be able to reduce the total processing time of the biometric authentication by performing the narrowing process in multiple stages using partial feature vectors of different sizes. To this end, the authentication apparatus 100 determines the number of stages n of the narrowing process on the basis of the number of templates N. In addition, the authentication apparatus 100 determines the bit length of partial feature values for each stage, on the basis of the number of stages n of the narrowing process.

Note that the number of templates registered in the database varies during the operation of the authentication apparatus 100. Therefore, the necessity of partial feature vectors and an optimal bit length also vary. To deal with this, in the second embodiment, the authentication apparatus 100 dynamically generates the partial feature vectors of templates at the time of authentication, without generating the partial feature vectors in advance.

The following describes how to determine the number of stages n of the narrowing process and the bit length of partial feature values. A workload $w_i$ is assigned to each of the narrowing process and the comparison process. A workload is a variable that indicates a load per template. The workload may be called the amount of work. A workload is proportional to the bit length of a partial feature value. A workload increases as the bit length increases, and a workload decreases as the bit length decreases. In the second embodiment, the workload $w_i$ indicates a bit length itself.

The processing time $t_i$ per template in a process i (any stage of the narrowing process or the comparison process) is proportional to the workload $w_i$ as defined in equation (1). In equation (1), t is a predetermined coefficient. In addition, a narrowing ratio $\alpha_i$ in the process i is inversely proportional to the workload $w_i$ as defined in equation (2). The narrowing ratio $\alpha_i$ is a ratio of the number of templates immediately after the process i to the number of templates immediately before the process i. The narrowing ratio $\alpha_i$ decreases as the workload $w_i$ increases, and the narrowing ratio $\alpha_i$ increases as the workload $w_i$ decreases. In equation (2), $\alpha$ is a predetermined coefficient.

$$t_i(w_i) = w_i t \qquad (1)$$

$$\alpha_i(w_i) = \frac{\alpha}{w_i} \qquad (2)$$

In the case where the narrowing process has one stage, the total processing time $T_1$ of the narrowing process and comparison process is calculated as given in equation (3). In equation (3), $w_p$ denotes the workload of the narrowing process, $w_m$ denotes the workload of the comparison process, $t_p$ denotes the unit processing time of the narrowing process, $t_m$ denotes the unit processing time of the comparison process, $\alpha_p$ denotes the narrowing ratio of the narrowing process, and N denotes the number of templates registered in the database. When the workload $w_p$ is optimized so as to minimize the processing time $T_1$, the minimum processing time $MinT_1$ is calculated as given in equation (4). In equation (4), the first term on the right side represents the processing time of the narrowing process, and the second term on the right side represents the processing time of the comparison process. As a result, the processing time of the narrowing process and the processing time of the comparison process are the same.

$$T_1(w_p, w_m) = N\left(t_p + \alpha_p t_m\right) = N\left(w_p t + \frac{\alpha}{w_p} w_m t\right) \qquad (3)$$

$$\mathrm{Min}T_1(w_m) = Nt\sqrt{\alpha w_m} + Nt\sqrt{\alpha w_m} \qquad (4)$$

Similarly, in the case where the narrowing process has two stages, the minimum processing time $MinT_2$ is calculated as given in equation (5). In equation (5), the first term on the right side represents the processing time of the first stage of the narrowing process, the second term on the right side represents the processing time of the second stage of the narrowing process, and the third term on the right side represents the processing time of the comparison process. As a result, the processing times of these stages of the narrowing process and the processing time of the comparison process are the same. By equalizing the processing times of the stages of the narrowing process and the comparison process in this manner, the total processing time of the narrowing process and comparison process is minimized.

$$\mathrm{Min}T_2(w_m) = Nt^3\sqrt{\alpha^2 w_m} + Nt^3\sqrt{\alpha^2 w_m} + Nt^3\sqrt{\alpha^2 w_m} \qquad (5)$$

As the number of stages n of the narrowing process, the authentication apparatus 100 determines the minimum number of stages n that satisfies the constraint condition of equation (6), where n is a non-negative integer like 0, 1, 2, .... In equation (6), $\alpha/w_m$ corresponds to the accuracy of the comparison process and is set in advance. For example, $\alpha/w_m = 10^{-6}$ (1-1,000,000th) . In this case, n is set to two or greater when $N \geq 10{,}000$. The authentication apparatus 100 may hold a table defining the correspondence relationship between the number of templates N and an optimal number of stages n.

$$C_n = N\alpha_n = N\left(\frac{\alpha}{w_m}\right)^{\frac{n}{n+1}} \geq 1 \qquad (6)$$

After determining the number of stages n, the authentication apparatus 100 determines the workload $w_{pi}$ of each stage of the narrowing process using equation (7) so that the stages of the narrowing process and the comparison process have an equal processing time. Here, the workload $w_{p0}$ before the narrowing process is defined as given in equation (8). Equation (8) defines that the narrowing ratio $\alpha_{p0}$ before the narrowing process is 1. Thereby, the workload $w_{pi+1}$ is calculated from the workload $w_{pi}$ in order. As a result, the bit length of partial feature values that are used in each stage of the narrowing process is determined.

$$\gamma_i = \frac{w_{pi+1}}{w_{pi}} = \sqrt[n+1]{\frac{w_m}{\alpha}} \qquad (7)$$

$$\frac{\alpha}{w_{p0}} = 1 \qquad (8)$$

The following describes the function and processing procedure of the authentication apparatus 100.

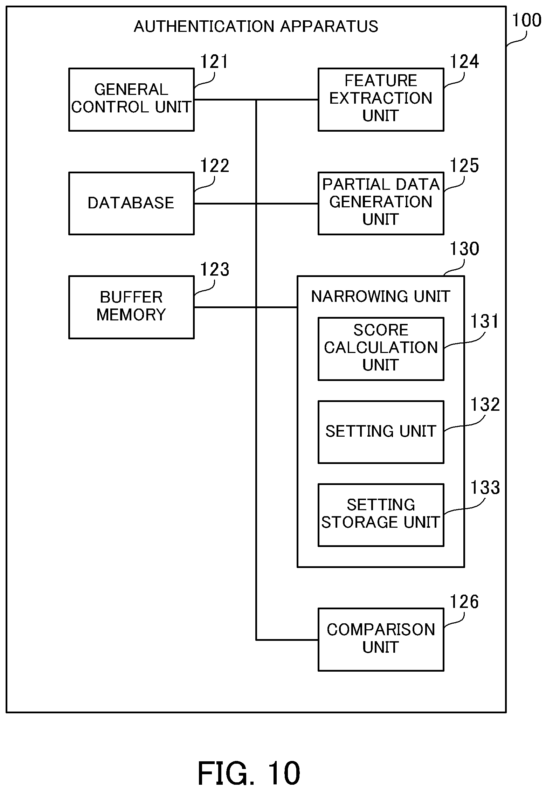

FIG. 10 is a block diagram illustrating an example of the function of the authentication apparatus.

The authentication apparatus 100 includes a general control unit 121, a database 122, a buffer memory 123, a feature extraction unit 124, a partial data generation unit 125, a comparison unit 126, and a narrowing unit 130. For example, the database 122 is implemented by using the flash memory 103. For example, the buffer memory 123 is implemented by using the R_AM 102.

The general control unit 121, feature extraction unit 124, partial data generation unit 125, comparison unit 126, and narrowing unit 130 are implemented by using the CPU 101, for example. In this connection, the general control unit 121, feature extraction unit 124, partial data generation unit 125, comparison unit 126, and narrowing unit 130 may correspond to different processors. Alternatively, some or all of the general control unit 121, feature extraction unit 124, partial data generation unit 125, comparison unit 126, and narrowing unit 130 may be implemented by using dedicated hardware such as ASIC and FPGA.

The general control unit 121 receives a biometric image for registration and controls the registration of the biometric image in the database 122. In addition, the general control unit 121 receives a biometric image for authentication, and controls the narrowing process and the comparison process on the database 122. The database 122 stores therein a user identifier (ID) and a template in association with each other with respect to each individual user. The template includes a binary feature vector or an encrypted binary feature vector. The buffer memory 123 temporarily stores therein currently-processed data.

The feature extraction unit 124 analyzes a biometric image to generate a feature vector, in accordance with an instruction from the general control unit 121. For example, the feature extraction unit 124 extracts a feature point from the biometric image through pattern matching, and carries out a principal component analysis on an image region including the feature point. The feature extraction unit 124 normalizes the feature vector to generate a normalized feature vector, and then binarizes the normalized feature vector to generate a binary feature vector. The feature extraction unit 124 may hold a table defining the correspondence relationship between a feature value and a normalized feature value. In addition, the feature extraction unit 124 may encrypt the binary feature vector.

The partial data generation unit 125 extracts at least one bit from each dimension of the binary feature vector or encrypted binary feature vector generated by the feature extraction unit 124 to generate a partial feature vector, in accordance with an instruction from the general control unit 121. In addition, the partial data generation unit 125 generates a partial feature vector from the binary feature vector or encrypted binary feature vector included in a template registered in the database 122. The information on the bit length of the partial feature values included in the partial feature vectors is given from the narrowing unit 130.

The comparison unit 126 compares the binary feature vector or encrypted binary feature vector generated by the feature extraction unit 124 with each template registered in the database 122 and calculates scores, in accordance with an instruction from the general control unit 121. Note that, in the case where the narrowing unit 130 performs the narrowing process, the comparison unit 126 just needs to perform the comparison process only on templates obtained as a result of the narrowing process. The comparison unit 126 determines based on the scores whether the authentication succeeds or fails. If the authentication succeeds, the comparison unit 126 instructs the door control device 32 to open the door.

The narrowing unit 130 performs the narrowing process on the templates registered in the database 122 in accordance with an instruction from the general control unit 121. The narrowing unit 130 includes a score calculation unit 131, a setting unit 132, and a setting storage unit 133.

The score calculation unit 131 calculates the hamming distances between a partial feature vector obtained for authentication and the partial feature vector of each template, which are generated by the partial data generation unit 125, and calculates tentative scores of the templates on the basis of the hamming distances. The score calculation unit 131 uses the tentative scores to select candidate templates that are likely to succeed in the comparison process of the comparison unit 126.

The setting unit 132 monitors the number of templates N in the database 122, and determines an optimal number of stages n of the narrowing process and the bit length of partial feature values that are used in the narrowing process on the basis of the number of templates N. The setting unit 132 may perform the setting process, periodically or when the number of templates N varies in the database 122. The setting storage unit 133 stores therein setting information generated by the setting unit 132. The information on the bit length of partial feature values is given from the narrowing unit 130 to the partial data generation unit 125.

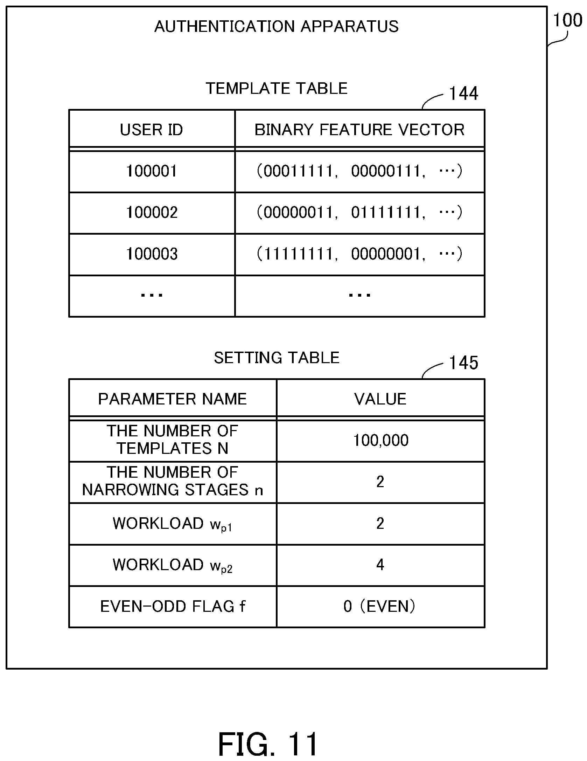

FIG. 11 illustrates an example of a template table and a setting table.

The template table 144 is stored in the database 122. The template table 144 stores therein a user ID and a binary feature vector in association with each other with respect to each individual user. Referring to FIG. 11, one binary feature vector is associated with one user ID, for simple description. However, a plurality of binary feature vectors representing a plurality of feature points may be associated with one user ID. In addition, the binary feature vectors included in the template table 144 may have been encrypted.

The setting table 145 is stored in the setting storage unit 133. The setting table 145 includes the number of templates N, the number of narrowing stages n, a workload w for each stage of the narrowing process, and an even-odd flag f. The number of templates N indicates the number of templates registered in the database 122 and is monitored by the setting unit 132. The number of narrowing stages n and the workload w for each stage are determined by the setting unit 132. In the second embodiment, the workload w indicates the bit length itself of partial feature values. In this connection, in the case where the workload w does not indicate the bit length itself, the setting unit 132 may hold a table defining the relationship between a workload w and a bit length. The even-odd flag is specified by the administrator of the authentication apparatus 100.

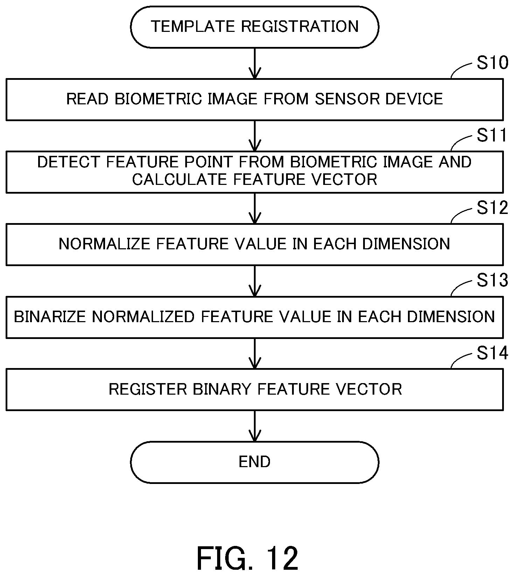

FIG. 12 is a flowchart describing an example of a template registration procedure.

(S10) The general control unit 121 reads a biometric image from the sensor device 110.

(S11) The feature extraction unit 124 detects a feature point from the biometric image, and carries out a principal component analysis on an image region including the detected feature point to calculate a feature vector.

(S12) The feature extraction unit 124 normalizes the feature value in each dimension of the feature vector according to a previously-learned probability distribution to thereby generate a normalized feature vector.

(S13) The feature extraction unit 124 binarizes the normalized feature value in each dimension of the normalized feature vector such as to adjust the number of bits of 1, to thereby generate a binary feature vector.

(S14) The general control unit 121 gives a user ID to a template including the binary feature vector and registers them in the database 122.

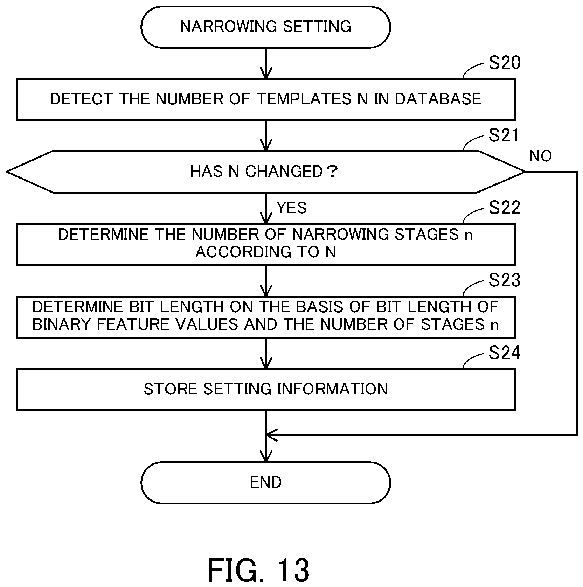

FIG. 13 is a flowchart describing an example of a narrowing setting procedure.

(S20) The setting unit 132 detects the number of templates N in the database 122.

(S21) The setting unit 132 determines whether the latest number of templates N detected at step S20 is different from the number of templates N registered in the setting table 145. If N has changed, the process proceeds to step S22. If N has not changed, the process is completed.

(S22) The setting unit 132 determines the number of narrowing stages n according to the latest number of templates N. For example, n is set to 2 or greater when N is 10,000 or greater.

(S23) The setting unit 132 determines a workload w indicating a bit length for each stage of the narrowing process, on the basis of the bit length of binary feature values and the number of narrowing stages n determined at step S22.

(S24) The setting unit 132 stores setting information indicating the number of templates N, the number of narrowing stages n, and the workload w of each stage in the setting table 145.

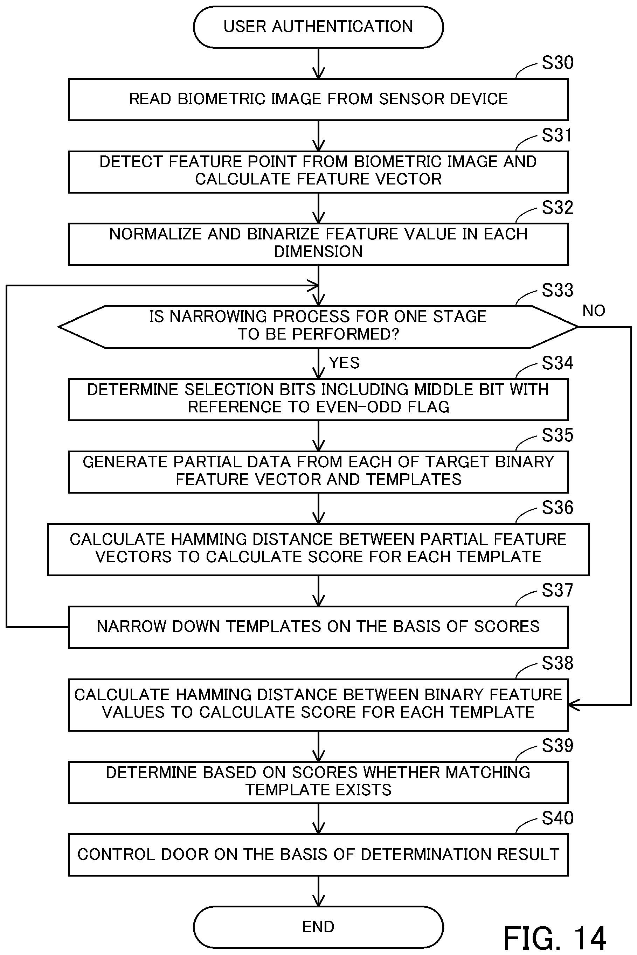

FIG. 14 is a flowchart describing an example of a user authentication procedure.

(S30) The general control unit 121 reads a biometric image from the sensor device 110.

(S31) The feature extraction unit 124 detects a feature point from the biometric image and carries out a principal component analysis on an image region including the detected feature point to calculate a feature vector.

(S32) The feature extraction unit 124 normalizes the feature value in each dimension of the feature vector, and binarizes the normalized feature values to thereby generate a binary feature vector.

(S33) The narrowing unit 130 determines whether to perform the narrowing process for one stage before going to the comparison process, that is, whether the narrowing process is not yet completed. If the narrowing process for one stage is determined to be performed, the process goes to step S34; otherwise, the process proceeds to step S38.

(S34) The partial data generation unit 125 specifies a middle bit of a binary feature value on the basis of the bit length of the binary feature value. If the bit length of the binary feature value is an even number, the partial data generation unit 125 selects an even-number bit or an odd-number bit with reference to the even-odd flag. The partial data generation unit 125 determines selection bits including the middle bit on the basis of the bit length of partial feature values set for the current narrowing process.

(S35) The partial data generation unit 125 generates partial data from the binary feature vector generated at step S32 by extracting the selection bits of step S34 from each dimension of the binary feature vector. By doing so, a partial feature vector of the target binary feature vector is obtained. In addition, the partial data generation unit 125 generates partial data from the binary feature vector included in each of the remaining candidate templates in the same manner. By doing so, partial feature vectors of the templates are obtained.

(S36) The score calculation unit 131 calculates the hamming distance between the partial feature vectors to calculate a score for each of the remaining candidate templates.

(S37) The score calculation unit 131 narrows down the candidate templates on the basis of the scores calculated at step S36. For example, the score calculation unit 131 selects candidate templates whose scores exceed a threshold. In addition, for example, the score calculation unit 131 preferentially selects as many candidate templates as expected to be output in the current narrowing process, in descending order of score. Then, the process proceeds back to step S33.

(S38) The comparison unit 126 calculates the hamming distance between the binary feature vector generated at step S32 and the binary feature vector included in each of the remaining candidate templates to calculate a score for each remaining candidate template.

(S39) The comparison unit 126 determines based on the scores calculated at step S38 whether there is a template that matches the biometric image of step S30. For example, the comparison unit 126 selects a template with the highest score and determines whether the score exceeds a threshold. If a template that matches the biometric image is found, the comparison unit 126 recognizes that the person appearing in the biometric image and the person of the template are the same person, and therefore determines that the authentication succeeds. If no template that matches the biometric image is found, the comparison unit 126 recognizes that the person appearing in the biometric image is not registered in the database 122, and therefore determines that the authentication fails.

(S40) The comparison unit 126 sends a control signal to the door control device 32 according to the determination result of step S39 to control the opening and closing of the door. The comparison unit 126 unlocks the door if the authentication has succeeded, and keeps locking the door if the authentication has failed.

The authentication apparatus 100 of the second embodiment performs the one-to-N authentication. Therefore, a user is able to get authenticated by providing his/her biometric information, e.g., by placing his/her palm over the authentication apparatus 100, without entering a user ID, which improves user friendliness. In addition, the authentication apparatus 100 performs the narrowing process on the database using partial data as preprocessing of the comparison process. Even in the case where a great number of templates are registered in the database, it is possible to reduce the computational cost and accelerate the biometric authentication. It is also possible to use embedded hardware with high constraints on performance.

In addition, the authentication apparatus 100 normalizes and binarizes feature vectors generated from biometric images, and evaluates a degree of similarity between binary feature vectors by calculating the hamming distance therebetween. Therefore, it is possible to obtain the degree of similarity using a logical operation that is faster than a floating-point operation and to thereby accelerate the narrowing process and the comparison process. Especially, even with an embedded processor, it is possible to perform the narrowing process and comparison process at a high speed. In addition, a binary feature value has bits of 1, the number of which is equal to the corresponding normalized feature value. Therefore, a hamming distance that is identical to a Euclidean distance is calculated, which prevents a decrease in the accuracy due to the use of the hamming distance. In addition, the feature value is normalized according to the probability distribution of feature values such that the normalized feature values have an equal occurrence probability. Therefore, it is possible to reflect the difference in features on the hamming distance as much as possible and to therefore prevent information from being lost.

In addition, a partial feature vector, which is used in the narrowing process, is generated by extracting at least one bit from each dimension of a binary feature vector. The partial feature vector has the same number of dimensions as the binary feature vector. In addition, the number of feature points used in the narrowing process is the same as that used in the comparison process. Therefore, it is possible to prevent information from being lost and also prevent a decrease in the accuracy, compared with an approach of reducing the number of dimensions and an approach of reducing the number of feature points.

In addition, it is possible to encrypt and then register binary feature vectors in the database. This reduces a risk of leaking users' biometric information. In addition, it is possible to perform the narrowing process and comparison process without decrypting the binary feature vectors. This accelerates the biometric authentication and improves security.

(Third Embodiment)

A third embodiment will now be described. The differences from the second embodiment will mainly be described, and the description on the same features as in the second embodiment will be omitted. The authentication apparatus 100 of the second embodiment performs access control using the one-to-N authentication. To achieve strict access control to a specified room, an authentication apparatus 100a of the third embodiment employs one-to-one authentication using an integrated circuit (IC) card, in addition to the one-to-N authentication.

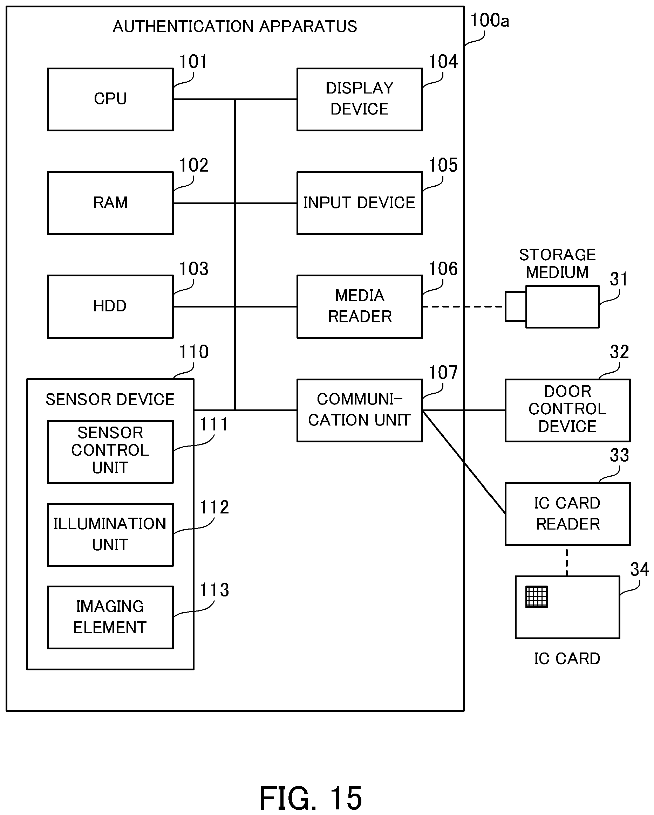

FIG. 15 illustrates an example of an information processing system according to the third embodiment.

The authentication apparatus 100a has the same hardware as the authentication apparatus 100 of the second embodiment. An IC card reader 33, as well as the door control device 32, is connected to the authentication apparatus 100a. The IC card reader 33 reads data from an IC card 34 and sends the read data to the authentication apparatus 100a.

The IC card 34 is distributed to a user who is permitted to enter the specified high-security room. When the user wants to enter the room, the user places his/her palm over the sensor device 110 and also places the IC card 34 over the IC card reader 33. The IC card 34 holds therein a template generated from a user's biometric image.

The authentication apparatus 100a performs the one-to-one authentication using the biometric image generated by the sensor device 110 at the time of room entry and the template read by the IC card reader 33. At this time, the authentication apparatus 100a does not need to perform the narrowing process or comparison process on a great number of templates registered in a database. The authentication apparatus 100a determines that the authentication succeeds if the features of the biometric image match the template recorded in the IC card 34, and determines that the authentication fails if the match is not found. For example, the authentication apparatus 100a calculates a score for the template recorded in the IC card 34, and determines that the authentication succeeds if the score exceeds a threshold.

Note that, since the IC card 34 has a small capacity, the IC card 34 may be unable to store the entire binary feature vector generated from a biometric image. For this reason, the IC card 34 stores a partial feature vector, which has been described in the second embodiment, instead of the binary feature vector. This partial feature vector may have been encrypted. A bit length for each dimension of the partial feature vector is determined in advance, taking into account the capacity of the IC card 34.

The authentication apparatus 100a receives the partial feature vector from the IC card reader 33. In addition, the authentication apparatus 100a generates a biometric image using the sensor device 110. The authentication apparatus 100a generates a feature vector from the biometric image, and normalizes and binarizes the feature vector to thereby generate a binary feature vector. In addition, the authentication apparatus 100a generates a partial feature vector from the binary feature vector in the manner described in the second embodiment. Here, the bit length for each dimension may be set to match the template. The authentication apparatus 100a calculates the hamming distance between the two partial feature vectors and calculates a score based on the hamming distance. The authentication apparatus 100a determines based on the score whether the authentication succeeds or fails.

The authentication apparatus 100a of the third embodiment provides the same effects as the authentication apparatus 100 of the second embodiment. In addition, the authentication apparatus 100a performs the one-to-one authentication using an IC card. This achieves strict access control and improves security. In addition, a partial feature vector is stored in the IC card. Therefore, even in the case where binary feature vectors registered in the database have a large size or the IC card has a small capacity, the one-to-one authentication using the IC card is achieved.

The above description is merely indicative of the principles of the present embodiments. A wide variety of modifications and changes may also be made by those skilled in the art. The present embodiments are not limited to the precise configurations and example applications indicated and described above, and all appropriate modifications and equivalents are regarded as falling within the scope of the embodiments as defined by the appended patent claims and their equivalents.

Reference Signs List

10 Information processing apparatus
11 Storage unit
12 Processing unit
13 Biometric image
14 Feature data
14a Feature value
15 Normalized feature data
15a Normalized feature value
16 Binary feature data
16a Bit string
17 Partial feature data
17a Partial bit string

**Claims**

1. A data generation method executed by a computer, the data generation method comprising:

   calculating feature data including a plurality of feature values from a biometric image;
   normalizing the plurality of feature values included in the feature data to normalized feature values, respectively, according to a probability distribution representing occurrence probabilities of possible values possible for the feature values, the normalized feature values taking multilevel discrete values;
   generating binary feature data including a plurality of bit strings corresponding to the plurality of feature values by converting each of the normalized feature values to a bit string in such a manner that a number of bits with a specified one value of two binary values increases as the each of the normalized feature values increases; and
   generating partial feature data including a plurality of partial bit strings corresponding to the plurality of bit strings included in the binary feature data and being smaller in bit length than the binary feature data, by extracting at least one bit from each of the plurality of bit strings.

**2.** The data generation method according to claim 1, wherein, in generating the partial feature data, a bit at a position determined based on a bit length of the plurality of bit strings is extracted from each of the plurality of bit strings.

**3.** The data generation method according to claim 1, wherein, in generating the partial feature data, the at least one bit is extracted from each of the plurality of bit strings such that the at least one bit includes a middle bit of the each of the plurality of bit strings.

**4.** The data generation method according to claim 3, wherein

with respect to each of the plurality of bit strings whose bit length is an even number, the middle bit is one of an even-number bit and an odd-number bit that are adjacent to each other in a middle of the each of the bit strings, and

in generating the partial feature data, the even-number bit is extracted from at least one bit string of the plurality of bit strings, and the odd-number bit is extracted from at least one remaining bit string of the plurality of bit strings.

**5.** The data generation method according to claim 1, further comprising:

reading other binary feature data registered in a database;

generating other partial feature data being smaller in bit length than the other binary feature data by extracting a bit corresponding to the at least one bit from the other binary feature data; and

presuming based on a hamming distance between the partial feature data and the other partial feature data whether the binary feature data and the other feature data match.

**6.** An information processing apparatus comprising:

a storage unit that stores therein feature data including a plurality of feature values calculated from a biometric image; and

a processing unit that performs a process including

normalizing the plurality of feature values included in the feature data to normalized feature values, respectively, according to a probability distribution representing occurrence probabilities of possible values possible for the feature values, the normalized feature values taking multilevel discrete values,

generating binary feature data including a plurality of bit strings corresponding to the plurality of feature values by converting each of the normalized feature values to a bit string in such a manner that a number of bits with a specified one value of two binary values increases as the each of the normalized feature values increases, and

generating partial feature data including a plurality of partial bit strings corresponding to the plurality of bit strings included in the binary feature data and being smaller in bit length than the binary feature data, by extracting at least one bit from each of the plurality of bit strings.

**7.** A data generation program that causes a computer to perform a process comprising:

calculating feature data including a plurality of feature values from a biometric image;

normalizing the plurality of feature values included in the feature data to normalized feature values, respectively, according to a probability distribution representing occurrence probabilities of possible values possible for the feature values, the normalized feature values taking multilevel discrete values;

generating binary feature data including a plurality of bit strings corresponding to the plurality of feature values by converting each of the normalized feature values to a bit string in such a manner that a number of bits with a specified one value of two binary values increases as the each of the normalized feature values increases; and

generating partial feature data including a plurality of partial bit strings corresponding to the plurality of bit strings included in the binary feature data and being smaller in bit length than the binary feature data, by extracting at least one bit from each of the plurality of bit strings.

INFORMATION PROCESSING APPARATUS 10

STORAGE UNIT 11

BIOMETRIC IMAGE 13

14a FEATURE DATA 14

| 0.5 | −0.9 | 0.1 | 1.2 | · · · |

15a NORMALIZED FEATURE DATA 15

| 2 | 0 | 1 | 3 | · · · |

16a BINARY FEATURE DATA 16

| 0011 | 0000 | 0001 | 0111 | · · · |

17a PARTIAL FEATURE DATA 17

| 01 | 00 | 01 | 11 | · · · |

PROCESSING UNIT 12

FIG. 1

AUTHENTICATION APPARATUS  100

CPU  101

DISPLAY DEVICE  104

RAM  102

INPUT DEVICE  105

FLASH MEMORY  103

MEDIA READER  106

STORAGE MEDIUM  31

SENSOR DEVICE  110

SENSOR CONTROL UNIT  111

COMMUNI-CATION UNIT  107

DOOR CONTROL DEVICE  32

ILLUMINATION UNIT  112

IMAGING ELEMENT  113

# FIG. 2

BIOMETRIC IMAGE 151

152-1  152-2

FEATURE POINT

152-3

FEATURE VECTOR

153-1 (0.5, −0.7, 1.2, ⋯)

153-2 (0.3, 0.2, −1.1, ⋯)

153-3 (0.9, −0.1, 0.8, ⋯)

154 TEMPLATE

SCORE

155-1  80

155-2  50

155-3  20

# FIG. 3

| FEATURE VECTOR | (0.5, −0.9, 0.1, 1.2, ···) | 161 |

**NORMALIZATION** S1

0    1   2    3

PROBABILITY DISTRIBUTION    162

$\mu-3\sigma$   $\mu-2\sigma$   $\mu-\sigma$   $\mu$   $\mu+\sigma$   $\mu+2\sigma$   $\mu+3\sigma$

| NORMALIZED FEATURE VECTOR | (2, 0, 1, 3, ···) | 163 |

**BINARIZATION** S2

| NORMALIZED FEATURE VALUE | BINARY FEATURE VALUE | 164 |
|---|---|---|
| 0 | 0 0 0 | |
| 1 | 0 0 1 | |
| 2 | 0 1 1 | |
| 3 | 1 1 1 | |

| BINARY FEATURE VECTOR | (011, 000, 001, 111, ···) | 165 |

# FIG. 4

141

| NORMALIZED FEATURE VALUE | BINARY FEATURE VALUE | HAMMING DISTANCE (BEFORE BINARIZATION) | HAMMING DISTANCE (AFTER BINARIZATION) |
|---|---|---|---|
| 0 (0b000) | 0 0 0 0 | 0 | 0 |
| 1 (0b001) | 0 0 0 1 | 1 | 1 |
| 2 (0b010) | 0 0 1 1 | 1 | 2 |
| 3 (0b011) | 0 1 1 1 | 2 | 3 |
| 4 (0b100) | 1 1 1 1 | 1 | 4 |

| 0 (0b000) | 0 0 0 0 |
|---|---|

# FIG. 5

BINARY FEATURE VECTOR

171

| #0 | 171-1 | #1 | 171-2 | #2 | 171-3 | |
|---|---|---|---|---|---|---|
| 0 0 1 1 1 1 1 1 | | 0 0 0 0 0 0 1 1 | | 0 0 0 0 1 1 1 1 | | ··· |

PARTIAL FEATURE VECTOR (1/8)

172

| #0 | 172-1 | #1 | 172-2 | #2 | 172-3 | |
|---|---|---|---|---|---|---|
| _ _ _ 1 _ _ _ _ | | _ _ _ 0 _ _ _ _ | | _ _ _ 0 _ _ _ _ | | ··· |

PARTIAL FEATURE VECTOR (1/4)

173

| #0 | 173-1 | #1 | 173-2 | #2 | 173-3 | |
|---|---|---|---|---|---|---|
| _ _ _ 1 _ _ _ 1 | | _ _ _ 0 _ _ _ 1 | | _ _ _ 0 _ _ _ 1 | | ··· |

PARTIAL FEATURE VECTOR (1/2)

174

| #0 | 174-1 | #1 | 174-2 | #2 | 174-3 | |
|---|---|---|---|---|---|---|
| _ 0 _ 1 _ 1 _ 1 | | _ 0 _ 0 _ 0 _ 1 | | _ 0 _ 0 _ 1 _ 1 | | ··· |

# FIG. 6

142

| NORMALIZED FEATURE VALUE | BINARY FEATURE VALUE | PARTIAL FEATURE VALUE (#0) | PARTIAL FEATURE VALUE (#1) |
|---|---|---|---|
| 0 | 0 0 0 0 | 0 | 0 |
| 1 | 0 0 0 1 | 1 | 0 |
| 2 | 0 0 1 1 | 1 | 1 |
| 3 | 0 1 1 1 | 1 | 1 |
| 4 | 1 1 1 1 | 1 | 1 |

# FIG. 7

143

| NORMALIZED FEATURE VALUE | BINARY FEATURE VALUE | PARTIAL FEATURE VALUE (EVEN) | PARTIAL FEATURE VALUE (ODD) |
|---|---|---|---|
| 0 | 0 0 0 0 | 0 0 (0) | 0 0 (0) |
| 1 | 0 0 0 1 | 0 1 (1) | 0 0 (0) |
| 2 | 0 0 1 1 | 0 1 (1) | 0 1 (1) |
| 3 | 0 1 1 1 | 1 1 (2) | 0 1 (1) |
| 4 | 1 1 1 1 | 1 1 (2) | 1 1 (2) |

# FIG. 8

BINARY FEATURE VECTOR $\quad$ 171

| #0 | 171-1 | #1 | 171-2 | #2 | 171-3 | |
|---|---|---|---|---|---|---|
| ( | 0 0 1 1 1 1 1 1 | | 0 0 0 0 0 0 1 1 | | 0 0 0 0 1 1 1 1 | · · · ) |

PARTIAL FEATURE VECTOR (1/8) $\quad$ 175

| #0 | 175-1 | #1 | 175-2 | #2 | 175-3 | |
|---|---|---|---|---|---|---|
| ( | _ _ _ 1 _ _ _ _ | | _ _ _ _ 0 _ _ _ | | _ _ _ 0 _ _ _ _ | · · · ) |

PARTIAL FEATURE VECTOR (1/4) $\quad$ 176

| #0 | 176-1 | #1 | 176-2 | #2 | 176-3 | |
|---|---|---|---|---|---|---|
| ( | _ _ _ 1 _ _ _ 1 | | 0 _ _ _ 0 _ _ _ | | _ _ _ 0 _ _ _ 1 | · · · ) |

PARTIAL FEATURE VECTOR (1/2) $\quad$ 177

| #0 | 177-1 | #1 | 177-2 | #2 | 177-3 | |
|---|---|---|---|---|---|---|
| ( | _ 0 _ 1 _ 1 _ 1 | | 0 _ 0 _ 0 _ 1 _ | | _ 0 _ 0 _ 1 _ 1 | · · · ) |

# FIG. 9

AUTHENTICATION APPARATUS 100

GENERAL
CONTROL UNIT 121

FEATURE
EXTRACTION
UNIT 124

DATABASE 122

PARTIAL DATA
GENERATION
UNIT 125

BUFFER
MEMORY 123

NARROWING UNIT 130

SCORE
CALCULATION
UNIT 131

SETTING UNIT 132

SETTING
STORAGE UNIT 133

COMPARISON
UNIT 126

FIG. 10

AUTHENTICATION APPARATUS 100

TEMPLATE TABLE 144

| USER ID | BINARY FEATURE VECTOR |
|---------|----------------------|
| 100001 | (00011111, 00000111, ⋯) |
| 100002 | (00000011, 01111111, ⋯) |
| 100003 | (11111111, 00000001, ⋯) |
| ⋯ | ⋯ |

SETTING TABLE 145

| PARAMETER NAME | VALUE |
|----------------|-------|
| THE NUMBER OF TEMPLATES N | 100,000 |
| THE NUMBER OF NARROWING STAGES n | 2 |
| WORKLOAD $w_{p1}$ | 2 |
| WORKLOAD $w_{p2}$ | 4 |
| EVEN-ODD FLAG f | 0 (EVEN) |

# FIG. 11

TEMPLATE REGISTRATION

S10
READ BIOMETRIC IMAGE FROM SENSOR DEVICE

S11
DETECT FEATURE POINT FROM BIOMETRIC IMAGE AND CALCULATE FEATURE VECTOR

S12
NORMALIZE FEATURE VALUE IN EACH DIMENSION

S13
BINARIZE NORMALIZED FEATURE VALUE IN EACH DIMENSION

S14
REGISTER BINARY FEATURE VECTOR

END

FIG. 12

NARROWING SETTING

S20

DETECT THE NUMBER OF TEMPLATES N IN DATABASE

S21

HAS N CHANGED ? — NO

YES S22

DETERMINE THE NUMBER OF NARROWING STAGES $n$ ACCORDING TO N

S23

DETERMINE BIT LENGTH ON THE BASIS OF BIT LENGTH OF BINARY FEATURE VALUES AND THE NUMBER OF STAGES $n$

S24

STORE SETTING INFORMATION

END

FIG. 13

USER AUTHENTICATION

S30

READ BIOMETRIC IMAGE FROM SENSOR DEVICE

S31

DETECT FEATURE POINT FROM BIOMETRIC IMAGE AND CALCULATE FEATURE VECTOR

S32

NORMALIZE AND BINARIZE FEATURE VALUE IN EACH DIMENSION

S33

IS NARROWING PROCESS FOR ONE STAGE TO BE PERFORMED? — NO

YES S34

DETERMINE SELECTION BITS INCLUDING MIDDLE BIT WITH REFERENCE TO EVEN-ODD FLAG

S35

GENERATE PARTIAL DATA FROM EACH OF TARGET BINARY FEATURE VECTOR AND TEMPLATES

S36

CALCULATE HAMMING DISTANCE BETWEEN PARTIAL FEATURE VECTORS TO CALCULATE SCORE FOR EACH TEMPLATE

S37

NARROW DOWN TEMPLATES ON THE BASIS OF SCORES

S38

CALCULATE HAMMING DISTANCE BETWEEN BINARY FEATURE VALUES TO CALCULATE SCORE FOR EACH TEMPLATE

S39

DETERMINE BASED ON SCORES WHETHER MATCHING TEMPLATE EXISTS

S40

CONTROL DOOR ON THE BASIS OF DETERMINATION RESULT

END

FIG. 14

AUTHENTICATION APPARATUS 100a

CPU 101

DISPLAY DEVICE 104

RAM 102

INPUT DEVICE 105

HDD 103

MEDIA READER 106

STORAGE MEDIUM 31

SENSOR DEVICE 110

SENSOR CONTROL UNIT 111

ILLUMINATION UNIT 112

IMAGING ELEMENT 113

COMMUNI-CATION UNIT 107

DOOR CONTROL DEVICE 32

IC CARD READER 33

IC CARD 34

FIG. 15

**INTERNATIONAL SEARCH REPORT**

| International application No. |
| --- |
| PCT/JP2020/038139 |

**A. CLASSIFICATION OF SUBJECT MATTER**
Int. Cl. G06T7/00(2017.01)i
FI: G06T7/00 510A

According to International Patent Classification (IPC) or to both national classification and IPC

**B. FIELDS SEARCHED**

Minimum documentation searched (classification system followed by classification symbols)
Int. Cl. G06T7/00

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2019-45969 A (FUJITSU LTD.) 22 March 2019 | 1, 5-7 |
| A | (2019-03-22), paragraphs [0026]-[0047], fig. 1-7 | 2-4 |
| Y | JP 2013-206187 A (FUJITSU LTD.) 07 October 2013 | 1, 5-7 |
| A | (2013-10-07), paragraphs [0019]-[0122], fig. 1-10 | 2-4 |
| A | JP 2007-310646 A (GLORY LTD.) 29 November 2007 (2007-11-29), paragraphs [0032]-[0098], fig. 1-11 | 1-7 |
| A | JP 2015-60433 A (FUJITSU LTD.) 30 March 2015 (2015-03-30), paragraphs [0015]-[0164], fig. 1-18 | 1-7 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17.12.2020 | 28.12.2020 |

| Name and mailing address of the ISA/<br>     Japan Patent Office<br>     3-4-3, Kasumigaseki, Chiyoda-ku,<br>     Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

International application No.

PCT/JP2020/038139

| Patent Documents referred to in the Report | Publication Date | Patent Family | Publication Date |
|---|---|---|---|
| JP 2019-45969 A | 22.03.2019 | US 2019/0065819 A1 paragraphs [0044]-[0065], fig. 1-7 EP 3451233 A1 | |
| JP 2013-206187 A | 07.10.2013 | US 2013/0262489 A1 paragraphs [0040]-[0123], fig. 1-10 | |
| JP 2007-310646 A | 29.11.2007 | (Family: none) | |
| JP 2015-60433 A | 30.03.2015 | US 2015/0082405 A1 paragraphs [0055]-[0202], fig. 1-18 | |

Form PCT/ISA/210 (patent family annex) (January 2015)

**REFERENCES CITED IN THE DESCRIPTION**

**Patent documents cited in the description**

- JP 2010277196 A
- JP 2012058954 A